# EUROPÄISCHE PATENTSCHRIFT

(11) **EP 3 676 106 B1**
(45) Veröffentlichungstag und Bekanntmachung des Hinweises auf die Patenterteilung: **18.08.2021**
(21) Anmeldenummer: 18727241.4
(22) Anmeldetag: 22.05.2018
(51) Int. Cl.: B60B 23/12

(54) **RADSYSTEM MIT EINER BREITENVERÄNDERLICHEN FELGE**
WHEEL WITH RIM HAVING VARIABLE WIDTH
ROUE AVEC JANTE À LARGEUR RÉGLABLE

(30) Priorität: 30.08.2017 DE 102017215178
(43) Veröffentlichungstag der Anmeldung: 08.07.2020
(73) Patentinhaber: Continental Reifen Deutschland GmbH, 30165 Hannover (DE)
(72) Erfinder: BERGER, Christoph, 30173 Hannover (DE); BRAEKER, Tobias, 30419 Hannover (DE); GANDYRA, Stefan, 30167 Hannover (DE); FRANTZ, Jürgen, 30826 Garbsen (DE); PAUL, Ingo, 30659 Hannover (DE)
(74) Vertreter: Continental Corporation
(86) Internationale Anmeldenummer: PCT/EP2018/063269
(87) Internationale Veröffentlichungsnummer: WO 2019/042598

(56) Entgegenhaltungen:
- WO-A1-2017/017223
- ES-A1- 2 263 404
- FR-A- 388 362
- US-A- 1 849 464
- US-A- 2 308 379

## Beschreibung

Die vorliegende Erfindung bezieht sich auf ein Radsystem. Das Radsystem weist ein Rad auf. Das Rad weist eine Felge auf, wobei die Felge eine erste Komponente und eine zweite Komponente aufweist. Die erste Komponente ist parallel zu einer Rotationsachse des Rades bewegbar und die erste Komponente und die zweite Komponente bilden einen Felgentiefraum aus.

Eine Tiefe des Felgentiefraumes erstreckt sich rechtwinklig zu der Rotationsachse und rechtwinklig zu einer Umlaufrichtung des Rades bis zu einem Felgentiefbett. Die Tiefe des Felgentiefraumes erstreckt sich in Richtung der Rotationsachse.

Die erste Komponente weist ein Trennelement auf, wobei sich das Trennelement in den Felgentiefraum erstreckt und eine Bewegung der ersten Komponente parallel zu der Rotationsachse zu einer Bewegung des Trennelementes in dem Felgentiefraum parallel zu der Rotationsachse führt. Eine Bewegung des Trennelementes in dem Felgentiefraum parallel zu der Rotationsachse führt zu einer Bewegung der ersten Komponente parallel zu der Rotationsachse.

Das Trennelement teilt den Felgentiefraum in einen ersten Raum und in einen zweiten Raum.

Eine Bewegung des Trennelements in dem Felgentiefraum bewirkt eine reziproke Änderung der Volumina des ersten Raumes und des zweiten Raumes.

Das Felgentiefbett ist Bestandteil der zweiten Komponente.

Bei dem Rad kann es sich um ein Rad eines Kraftfahrzeuges oder eines Fahrrades handeln.

Durch die Bewegung der ersten Komponente gegenüber der zweiten Komponente wird eine Veränderung einer Maulweite der Felge bewirkt. Bei der Maulweite der Felge handelt es sich um den Abstand zwischen zwei Felgenhörnern der Felge.

Über eine Änderung der Maulweite der Felge kann eine Bodenaufstandsfläche eines Luftreifens, der auf dem Rad montiert ist, verändert werden.

Bei der Bodenaufstandsfläche handelt es sich um einen Bereich einer Oberfläche des Luftreifens, der in unmittelbarem Kontakt mit einer Fahrbahn steht, auf der das Rad rollt. Während eines regulären Betriebes eines Rades weist die mindestens eine erste Komponente von der mindestens einen zweiten Komponente einen regulären Abstand parallel zu der Rotationsachse des Rades auf. Durch eine Veränderung dieses Abstands kann die Bodenaufstandsfläche verändert und beispielsweise an Bedingungen der Fahrbahn angepasst werden. Eine Veränderung des Abstands führt zu einer Vergrößerung oder zu einer Verkleinerung der Bodenaufstandsfläche.

Bei der Rotationsachse des Rades handelt es sich um eine solche Achse des Rades, um die das Rad während des regulären Betriebs rotiert. Die Rotation des Rades während seines regulären Betriebs ist in Richtung der Umlaufrichtung orientiert.

Aus dem Stand der Technik sind Verfahren und Vorrichtungen bekannt, wobei mittels der Verfahren oder Vorrichtungen eine Maulweite einer Felge eingestellt und bedient werden kann. Beispielsweise wird in der ES 2263404 B1 ein Verfahren offenbart, wobei eine elektronisch wirkende Vorrichtung zur Steuerung einer Felgenweite offenbart wird. Aus der US2308379A ist ein Radsystem bekannt. Das Radsystem weist ein Rad auf, wobei das Rad eine Felge aufweist. Dabei weist die Felge eine erste Komponente auf und eine zweite Komponente. Die erste Komponente ist parallel zu einer Rotationsachse des Rades bewegbar. Die erste Komponente und die zweite Komponente bilden einen Felgentiefraum aus. Dabei erstreckt sich eine Tiefe des Felgentiefraumes rechtwinkelig zu der Rotationsachse und rechtwinkelig zu einer Umlaufrichtung des Rades. Dabei weist die erste Komponente ein Trennelement auf, wobei sich das Trennelement in den Felgentiefraum erstreckt und eine Bewegung der ersten Komponente parallel zu der Rotationsachse zu einer Bewegung des Trennelementes in dem Felgentiefraum parallel zu der Rotationsachse führt. Ferner führt eine Bewegung des Trennelements in dem Felgentiefraum parallel zu der Rotationsachse zu einer Bewegung der ersten Komponente parallel zu der Rotationsachse. Dabei teilt das Trennelement den Felgentiefraum in einen ersten Raum und in einen zweiten Raum. Eine Bewegung des Trennelements in dem Felgentiefraum bewirkt eine reziproke Änderung der Volumina des ersten Raumes und des zweiten Raumes.

In der ES2263404A1 ist ebenfalls ein Radsystem offenbart worden. Dabei weist dieses Radsystem ein Rad auf, wobei das Rad eine Felge aufweist, wobei die Felge eine erste Komponente und eine zweite Komponente aufweist, wobei die erste Komponente parallel zu einer Rotationsachse des Rades bewegbar ist. Dabei bilden die erste Komponente und die zweite Komponente einen Felgentiefraum aus.

Ferner ist es aus dem Stand der Technik bekannt, hydraulisch wirkende Vorrichtungen zur Veränderung der Maulweite einer Felge zu verwenden. Bei der hydraulisch wirkenden Vorrichtung handelt es sich um eine Vorrichtung zur Breitenverstellung der Felge.

Bei den aus dem Stand der Technik bekannten hydraulisch wirkenden Vorrichtungen zur Bewegung einer ersten Komponente einer Felge gegenüber einer zweiten Komponente einer Felge werden regelmäßig Speicherkammern für eine hydraulisch wirkende Flüssigkeit benötigt. Aus den Speicherkammern, auch Tanks genannt, wird die hydraulisch wirkende Flüssigkeit in eine Aktuatorkammer geleitet. Durch eine Änderung der Menge der hydraulisch wirkenden Flüssigkeit in der Aktuatorkammer kann ein Druck in der Aktuatorkammer verändert werden; die Änderung eines Druckes in der Aktuatorkammer kann zu einer Bewegung einer bewegbaren Komponente der Aktuatorkammer führen. Bei dieser bewegbaren Komponente handelt es sich um eine Felgenkomponente, die gegenüber einer anderen Komponente der Felge bewegt werden kann.

Die Nutzung und Anordnung der Speicherkammern für hydraulisch wirkende Flüssigkeit innerhalb eines Rades geht regelmäßig mit einer Nutzung von Einbauraum innerhalb des Rades einher. Der Einbauraum innerhalb des Rades ist begrenzt. Durch die Nutzung der Speicherkammer in einem Rad könnte zu wenig Einbauraum für andere Bauteile in dem Rad vorhanden sein.

Der Erfindung liegt daher die Aufgabe zugrunde, ein verbessertes Radsystem mit einer verbesserten Vorrichtung zur Breitenverstellung einer Felge bereitzustellen, wobei durch den Einsatz der verbesserten Vorrichtung zur Breitenverstellung einer Felge Einbauraum innerhalb des Rades gespart werden soll.

Gelöst wird die gestellte Aufgabe dadurch, dass der erste Raum über mindestens ein erstes Ventil und der zweite Raum über mindestens ein zweites Ventil mit mindestens einer Druckvorrichtung fluidleitend verbindbar sind.

Durch den erfindungsgemäßen Umstand, dass der erste Raum über mindestens ein erstes Ventil und der zweite Raum über mindestens ein zweites Ventil mit mindestens einer Druckvorrichtung fluidleitend verbindbar sind, kann durch Änderung der Menge einer hydraulisch wirkenden Flüssigkeit in dem ersten oder dem zweiten Raum, der Druck in dem ersten und dem zweiten Raum verändert werden. Bei einer Druckdifferenz zwischen dem ersten und dem zweiten Raum wird eine resultierende Kraft auf das Trennelement erzeugt, das räumlich zwischen dem ersten Raum und dem zweiten Raum angeordnet ist.

Die resultierende Kraft führt zu einer Bewegung des Trennelements und somit der ersten Komponente. Der erste oder der zweite Raum können zugleich und abwechselnd als Speicherkammer und als Aktuatorkammer genutzt werden. Eine separate Speicherkammer mit lediglich für die Speicherung der hydraulisch wirkenden Flüssigkeit erforderlichem Volumen ist nicht notwendig. Ein Volumen der Aktuatorkammer dient zugleich als Volumen der Speicherkammer. Somit wird insgesamt weniger Volumen und also weniger Einbauraum für Aktuatorkammer und Speicherkammer benötigt. Dies führt zu einer verbesserten Nutzung des gegebenen Einbauraums in dem Rad.

Somit wird ein Radsystem mit einer verbesserten Vorrichtung zu einer Breitenverstellung der Felge bereitgestellt, wodurch Einbauraum innerhalb des Rades gespart wird und für andere Vorrichtungen bereitgestellt werden kann.

Der erste Raum ist über das mindestens eine erste Ventil und der zweite Raum ist über das mindestens eine zweite Ventil mit mindestens einer Druckvorrichtung derart fluidleitend verbindbar, dass ein Fluid von der mindestens einen Druckvorrichtung in den ersten Raum und/oder den zweiten Raum hinein gefördert und/oder aus dem ersten Raum und/oder dem zweiten Raum heraus gefördert werden kann, derart, dass eine Volumenänderung des ersten Raumes oder des zweiten Raumes hervorgerufen wird die zu einer Druckübertragung von dem ersten Raum oder dem zweiten Raum auf das erste Trennelement führt. Die Bewegung des ersten Trennelementes führt zu einer Bewegung der ersten Komponente und damit zu einer Veränderung der Maulweite der Felge. Die Bewegung des ersten Trennelementes innerhalb des Felgentiefraumes ist parallel oder antiparallel zu der Rotationsachse des Rades gerichtet. Die Druckübertragung liegt in einem Bereich von 5 Bar bis 50 Bar.

Insbesondere kann ein Luftdruck, der in einem auf dem Rad angebrachten Luftreifen herrscht, zu einer Bewegung der ersten Komponente verwendet werden. Der Luftdruck führt zu einer Kraft, die auf den Luftreifen und über diesen auf die Felgenhörner wirkt. Da eines der Felgenhörner mit der ersten Komponente starr verbunden ist, kann durch die Kraftübertragung auf das Felgenhorn auch die erste Komponente in einer Richtung parallel zu der Rotationsachse und von der zweiten Komponente weg weisend bewegt werden. Um im Fall des erfindungsgemäßen Radsystems eine derartige Bewegung der ersten Komponente auf Grund des Luftdruckes in dem Luftreifen zu ermöglichen, muss das mindestens eine erste Ventil derart geöffnet sein, dass ein Fließen einer hydraulischen wirkenden Flüssigkeit aus dem ersten Raum heraus möglich ist.

Das erfindungsgemäße Radsystem ist entsprechend all seiner Ausgestaltungsformen sowohl für hydraulisch wirkende Aktuatoren als auch für pneumatisch wirkende Aktuatoren und Druckvorrichtungen einsetzbar.

Weitere vorteilhafte Ausgestaltungsformen der Erfindung sind Gegenstand der Unteransprüche.

Gemäß einer Ausgestaltungsform der Erfindung weist das Radsystem mindestens eine Druckvorrichtung auf. Die mindestens eine Druckvorrichtung ist innerhalb des Rades oder an dem Rad oder außerhalb des Rades angeordnet.

Gemäß einer nächsten vorzugsweisen Ausgestaltungsform der Erfindung sind das mindestens eine erste Ventil und/oder das mindestens eine zweite Ventil mittels mindestens eines Verbindungsmittels, beispielsweise eines Schlauches oder einer starren Verbindungsleitung, mit der mindestens einen Druckvorrichtung fluidleitend verbunden oder verbindbar.

Der Schlauch und die starre Verbindungsleitung sind zum Transport von Fluiden geeignet. Der Schlauch oder die starre Verbindungsleitung können einen kreisförmigen Querschnitt oder einen polygonalen Querschnitt, insbesondere einen viereckigen Querschnitt, aufweisen.

Der Schlauch kann vorzugsweise zumindest teilweise aus einem Elastomer und/oder einem Thermoplasten ausgebildet sein. Beispielhafte Elastomere, die für die Ausbildung des Schlauches geeignet sind, sind Naturkautschuk, Butadien-Kautschuk, Butylkautschuk, Chloropren-Kautschuk, Ethylen-Propylen-Dien-Kautschuk, Fluorkautschuk, Isopren-Kautschuk, Silicon-Kautschuk und/oder Styrol-Butadien-Kautschuk.

Beispielhafte Thermoplaste, die für die Ausbildung des Schlauches geeignet sind, sind Thermoplastisches Urethan, Polyurethan, Acrylnitril-Butadien-Styrol, Ethylen-Propylen-Copolymer, Ethylen-Tetrafluorethylen, Fluorethylenpropylen, High Impact Polystyrene, Perfluoralkoxylalkan, Polyamid, Polybutylenterephthalat, Polyester, Polyesteramid, Polyetherketone, Polyethersulfon, Polyethylen, Polyethylenterephthalat, Polymethylmethacrylat, Polyoxymethylen, Polyphenylensulfid, Polypropylen, Polytetrafluorethylen, Polyvinylchlorid und/oder Ungesättigter Polyester.

Die starre Verbindungsleitung kann vorzugsweise aus Stahl, Aluminium, Kupfer, Messing und/oder Zink ausgebildet sein.

Gemäß einer nächsten vorzugsweisen Ausgestaltungsform der Erfindung ist das mindestens eine erste Ventil in dem mindestens einen Verbindungsmittel angeordnet und/oder das mindestens eine zweite Ventil ist in dem mindestens einen Verbindungsmittel angeordnet.

Gemäß einer nächsten vorzugsweisen Ausgestaltungsform der Erfindung ist das mindestens eine erste Ventil in der ersten Komponente oder in der zweiten Komponente angeordnet und/oder das mindestens eine zweite Ventil ist in der ersten Komponente oder in der zweiten Komponente angeordnet.

Gemäß einer nächsten vorzugsweisen Ausgestaltungsform der Erfindung ist das mindestens eine erste Ventil in der mindestens einen Druckvorrichtung angeordnet und/oder das mindestens eine zweite Ventil ist in der mindestens einen Druckvorrichtung angeordnet.

Gemäß einer nächsten vorzugsweisen Ausgestaltungsform der Erfindung sind das mindestens eine erste Ventil und das mindestens eine zweite Ventil in einer gemeinsamen Ventilvorrichtung angeordnet.

Gemäß einer nächsten vorzugsweisen Ausgestaltungsform der Erfindung handelt es sich bei der mindestens einen Druckvorrichtung um eine hydraulisch wirkende Druckvorrichtung oder um eine pneumatisch wirkende Druckvorrichtung.

Gemäß einer nächsten vorzugsweisen Ausgestaltungsform der Erfindung handelt es sich bei der mindestens einen Druckvorrichtung um eine druckspeichernde Druckvorrichtung und/oder um eine druckerzeugende Druckvorrichtung. Die Druckvorrichtung ist zur Erzeugung und/oder Speicherung eines Druckes in einem Bereich bis 5 Bar bis 50 Bar geeignet. Für den Fall, dass es sich bei der Druckvorrichtung um ein eine druckspeichernde Druckvorrichtung und/oder um eine druckerzeugende Druckvorrichtung handelt, ist diese Druckvorrichtung zur Erzeugung und Speicherung eines erzeugten Druckes vorgesehen. Beispielsweise handelt es sich bei der hydraulischen oder der pneumatisch wirkenden druckerzeugenden Druckvorrichtung um eine Kolbenpumpvorrichtung, eine Membranpumpvorrichtung, eine Schraubenpumpvorrichtung, eine Zahnradpumpvorrichtung, eine Flügelzellenpumpvorrichtung oder eine Kreiselpumpvorrichtung.

Bei der druckspeichernden Druckvorrichtung handelt es sich insbesondere um einen Membranspeicher oder insbesondere für den Fall einer pneumatisch wirkenden Druckvorrichtung um einen Druckluftspeicher.

Gemäß einer nächsten vorzugsweisen Ausgestaltungsform der Erfindung handelt es sich bei dem mindestens einen ersten Ventil und/oder bei dem mindestens einen zweiten Ventil um ein Schieberventil oder um ein Sitzventil oder um ein Sperrventil oder um ein Wegeventil. Bei einem Schieberventil handelt es sich beispielsweise um ein Kolbenventil. Bei einen Sperrventil handelt es sich beispielsweise um ein Absperrventil, um ein Rückschlagventil, um ein Wechselventil oder um ein Zweidruckventil. Bei dem Sitzventil handelt es sich beispielsweise um ein Tellerventil, um ein Rohrventil, um ein Doppelsitzventil, um ein Nadelventil oder um ein Kugelventil.

Wegeventile führen insbesondere zu dem Vorteil, dass sie platzsparender sind als zwei vergleichbare einzelne Ventile. Wegeventile können ferner über einen gemeinsamen Aktuator angesteuert und betrieben werden.

Gemäß einer nächsten vorzugsweisen Ausgestaltungsform der Erfindung weist das erste Trennelement ein Dichtungselement auf. Das Dichtungselement steht mit dem Felgentiefbett in Kontakt und ist insbesondere aus Stahl und/oder Aluminium und/oder einem Kunststoff, beispielsweise Polyamid, und/oder Karbon und/oder aus einem Elastomer und/oder einem Thermoplasten ausgebildet. Beispielhafte Elastomere sind Naturkautschuk, Butadien-Kautschuk, Butylkautschuk, Chloropren-Kautschuk, Ethylen-Propylen-Dien-Kautschuk, Fluorkautschuk, Isopren-Kautschuk, Silicon-Kautschuk und/oder Styrol-Butadien-Kautschuk.

Beispielhafte Thermoplaste sind Thermoplastisches Urethan, Polyurethan, Acrylnitril-Butadien-Styrol, Ethylen-Propylen-Copolymer, Ethylen-Tetrafluorethylen, Fluorethylenpropylen, High Impact Polystyrene, Perfluoralkoxylalkan, Polyamid, Polybutylenterephthalat, Polyester, Polyesteramid, Polyetherketone, Polyethersulfon, Polyethylen, Polyethylenterephthalat, Polymethylmethacrylat, Polyoxymethylen, Polyphenylensulfid, Polypropylen, Polytetrafluorethylen, Polyvinylchlorid und/oder Ungesättigter Polyester.

Dadurch, dass das Dichtungselement aus Stahl und/oder Aluminium und/oder einem Kunststoff, beispielsweise Polyamid, und/oder Karbon und/oder einem Elastomer und/oder einem Thermoplasten ausgebildet ist, wird eine Bewegung des ersten Trennelementes entlang des Felgentiefbettes ermöglicht, ohne, dass es zu einem Abrieb des Dichtungselementes an dem Felgentiefbett kommt. Zugleich ist eine Abdichtung zwischen dem ersten Raum und dem zweiten Raum hinsichtlich der hydraulisch wirkenden Flüssigkeit durch das Dichtungselement sichergestellt.

Gemäß einer nächsten vorzugsweisen Ausgestaltungsform der Erfindung sind der erste Raum und der zweite Raum mittels mindestens eines Dichtungsmittels fluiddicht abgeschlossen. Das Dichtungsmittel ist insbesondere aus Stahl und/oder Aluminium und/oder einem Kunststoff, beispielsweise Polyamid, und/oder Karbon und/oder aus einem Elastomer und/oder einem Thermoplasten ausgebildet. Beispielhafte Elastomere sind Naturkautschuk, Butadien-Kautschuk, Butylkautschuk, Chloropren-Kautschuk, Ethylen-Propylen-Dien-Kautschuk, Fluorkautschuk, Isopren-Kautschuk, Silicon-Kautschuk und/oder Styrol-Butadien-Kautschuk.

Beispielhafte Thermoplaste sind Thermoplastisches Urethan, Polyurethan, Acrylnitril-Butadien-Styrol, Ethylen-Propylen-Copolymer, Ethylen-Tetrafluorethylen, Fluorethylenpropylen, High Impact Polystyrene, Perfluoralkoxylalkan, Polyamid, Polybutylenterephthalat, Polyester, Polyesteramid, Polyetherketone, Polyethersulfon, Polyethylen, Polyethylenterephthalat, Polymethylmethacrylat, Polyoxymethylen, Polyphenylensulfid, Polypropylen, Polytetrafluorethylen, Polyvinylchlorid und/oder Ungesättigter Polyester.

Die mindestens eine Druckvorrichtung kann gemäß einer vorzugsweisen Ausgestaltungsform der Erfindung im Bereich eines Felgenspiegels des Rades oder in einem Bereich von Speichen des Rades oder eines Felgenschlüssels des Rades oder eines Felgenrings des Rades angeordnet sein.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines erfindungsgemäßen Radsystems gemäß einer ersten Ausführungsform;
- Fig. 2: eine schematische Darstellung eines erfindungsgemäßen Radsystems gemäß einer zweiten Ausführungsform;
- Fig. 3: eine schematische Darstellung eines erfindungsgemäßen Radsystems gemäß einer dritten Ausführungsform;
- Fig. 4: eine schematische Darstellung eines erfindungsgemäßen Radsystems gemäß einer vierten Ausführungsform.

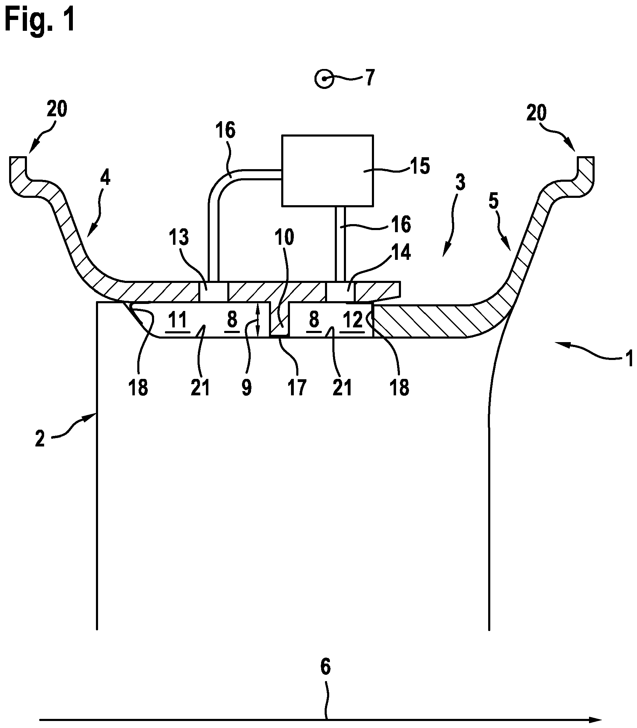

In der Figur 1 ist ein erfindungsgemäßes Radsystem 1 gemäß einer ersten Ausführungsform schematisch in Radialschnittansicht dargestellt.

Das Radsystem 1 weist ein Rad 2 auf.

Das Rad 2 ist radial symmetrisch bezüglich einer Rotationsachse 6. Die Rotationsachse 6 stellt darüber hinaus die Rotationsachse des Rades 2 während einer Rollbewegung des Rades 2 in eine Umlaufrichtung 7 dar.

Das Rad 2 weist eine Felge 3 auf, wobei die Felge 3 eine erste Komponente 4 und eine zweite Komponente 5 aufweist. Die erste Komponente 4 ist parallel zu der Rotationsachse 6 des Rades 2 bewegbar. Die Felge 3 weist Felgenhörner 20 auf.

Die erste Komponente 4 und die zweite Komponente 5 bilden einen Felgentiefraum 8 aus. Eine Tiefe 9 des Felgentiefraumes 8 erstreckt sich rechtwinklig zu der Rotationsachse 6 und rechtwinklig zu einer Umlaufrichtung 7 des Rades 2 bis zu einem Felgentiefbett 21. Das Felgentiefbett 21 ist Bestandteil der zweiten Komponente 5.

Die erste Komponente 4 weist ein Trennelement 10 auf, wobei sich das erste Trennelement 10 in den Felgentiefraum 8 erstreckt.

Eine Bewegung der ersten Komponente 4 parallel zu der Rotationsachse 6 führt zu einer Bewegung des Trennelementes 10 in dem Felgentiefraum 8 parallel zu der Rotationsachse 6. Zugleich führt eine Bewegung des Trennelementes 10 in dem Felgentiefraum 8 parallel zu der Rotationsachse 6 zu einer Bewegung der ersten Komponente 4 parallel zu der Rotationsachse 6.

Das Trennelement 10 teilt das Felgentiefraum 8 in einen ersten Raum 11 und in einen zweiten Raum 12.

Eine Bewegung des Trennelements 10 in dem Felgentiefraum 8 bewirkt eine reziproke Änderung der Volumina des ersten Raumes 11 und des zweiten Raumes 12.

Der erste Raum 11 ist über mindestens ein erstes Ventil 13 und der zweite Raum 12 ist über mindestens ein zweites Ventil 14 mit mindestens einer Druckvorrichtung 15 fluidleitend verbindbar.

Das mindestens eine erste Ventil 13 und das mindestens eine zweite Ventil 14 sind insbesondere mittels mindestens eines Verbindungsmittels 16 mit der mindestens einen Druckvorrichtung 15 fluidleitend verbunden.

Insbesondere weist das Trennelement 10 ein Dichtungselement 17 auf, wobei das Dichtungselement 17 mit dem Felgentiefbett 21 in Kontakt steht. Durch das Dichtungselement 17 werden die Räume 11 und 12 hinsichtlich der hydraulisch wirkenden Flüssigkeit gegeneinander abgedichtet.

Die Räume 11 und 12 sind insbesondere ringförmig ausgebildet und verlaufen kreisförmig entlang des vollständigen Felgentiefbettes 21 in Umlaufrichtung 7. Die Räume 11 und 12 haben beispielsweise einen annähernd rechteckigen Querschnitt, wobei ein Normalvektor des Querschnitts parallel zu der Umlaufrichtung 7 gerichtet ist.

Vorzugsweise sind der erste Raum 11 und der zweite Raum 12 mittels mindestens eines Dichtungsmittels 18 fluiddicht abgeschlossen.

Gemäß der Darstellung in der Figur 1 ist die mindestens eine Druckvorrichtung 15 ausgehend von der Rotationsachse 6 weiter außen angeordnet als die Felge 3. Für den Fall, dass ein nicht dargestellter Luftreifen auf der Felge 3 angeordnet ist und eine Riefeninnenfläche des Luftreifens und die Felge 3 einen Reifeninnenraum ausbilden, ist gemäß der Ausführungsform, wie sie in der Figur 1 dargestellt ist, die Druckvorrichtung 15 innerhalb des Reifeninnenraumes angeordnet, wird eine Kollision mit einer Bremsvorrichtung vermieden. Ferner wird der bislang kaum genutzte Reifeninnenraum als Bauraum verwendet werden und die Felge 3 bleibt in ihrer Außengestalt weitestgehend unverändert.

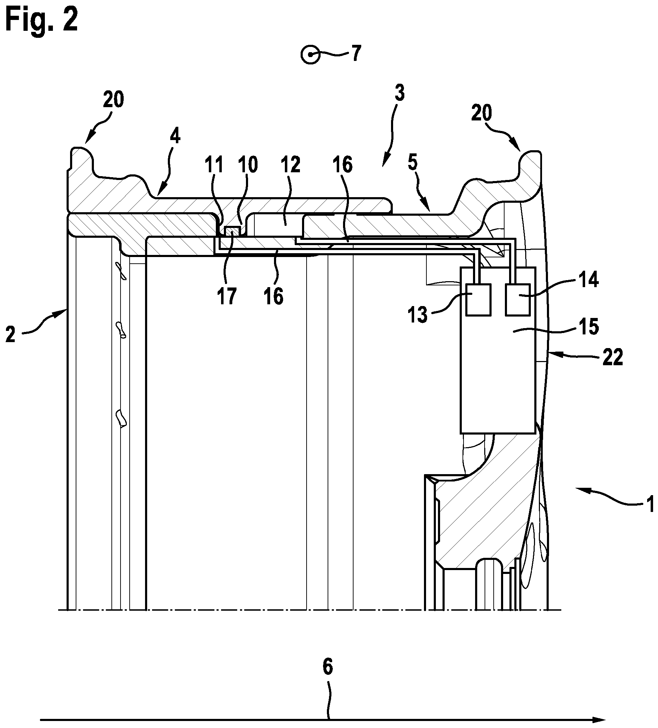

In der Figur 2 ist ein erfindungsgemäßes Radsystem 1 gemäß einer zweiten Ausführungsform schematisch in Radialschnittansicht dargestellt.

Gemäß der Darstellung in der Figur 2 ist die mindestens eine Druckvorrichtung 15 innerhalb des Rades 2 angeordnet. Das mindestens eine erste Ventil 13 und das mindestens eine zweite Ventil 14 sind innerhalb der mindestens einen Druckvorrichtung 15 angeordnet. Somit kann auf die mindestens eine Druckvorrichtung 15 und auf das mindestens eine erste Ventil 13 und auf das mindestens eine zweite Ventil 14 zugegriffen werden, beispielsweise für Montage- oder Reparaturarbeiten, ohne, dass beispielsweise ein auf dem Rad 2 angeordneter Reifen demontiert werden muss. Die mindestens eine Druckvorrichtung 15 ist gemäß der Darstellung in der Figur 2 im Bereich eines Felgenspiegels 22 angeordnet.

Insbesondere kann die mindestens eine Druckvorrichtung 15 auch in einem Bereich von Speichen des Rades 2 oder eines Felgenschlüssels des Rades 2 oder eines Felgenrings des Rades 2 angeordnet sein.

Die Verbindungsmittel 16 führen die hydraulisch wirkende Flüssigkeit von der mindestens einen Druckvorrichtung 15 in die Räume 11 und 12.

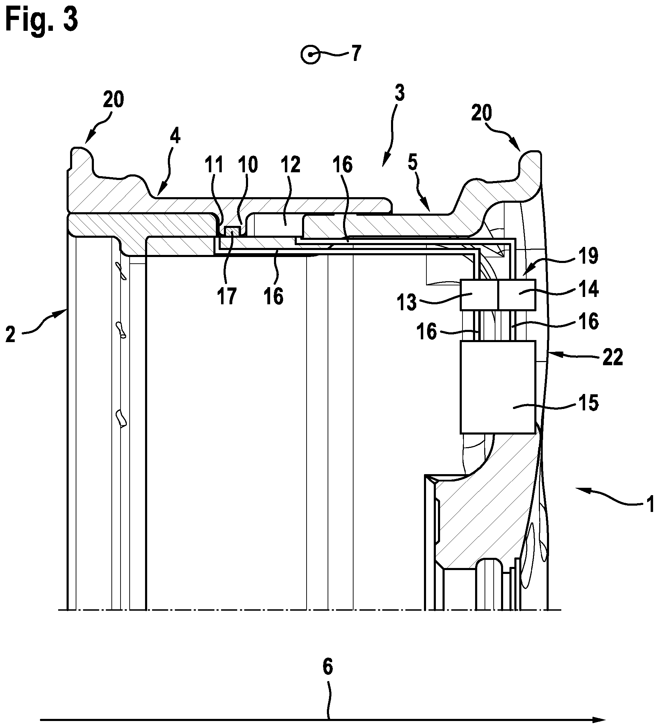

In der Figur 3 ist ein erfindungsgemäßes Radsystem 1 gemäß einer dritten Ausführungsform schematisch in Radialschnittansicht dargestellt.

Gemäß der Darstellung in der Figur 3 ist die mindestens eine Druckvorrichtung 15 innerhalb des Rades 2 angeordnet. Das mindestens eine erste Ventil 13 und das mindestens eine zweite Ventil 14 sind innerhalb einer gemeinsamen Ventilvorrichtung 19 angeordnet. Diese Anordnung in der gemeinsamen Ventilvorrichtung 19 ermöglicht die Verwendung von für Hydrauliktransporte geeigneten Wegeventilen als Ventil 13 und Ventil 14.

Die Verbindungsmittel 16 führen die hydraulisch wirkende Flüssigkeit von der mindestens einen Druckvorrichtung 15 durch die gemeinsame Ventilvorrichtung 19 in die Räume 11 und 12. Die mindestens eine Druckvorrichtung 15 ist in dem Rad 2 angeordnet.

Die mindestens eine Druckvorrichtung 15 ist gemäß der Darstellung in der Figur 3 im Bereich eines Felgenspiegels 22 angeordnet.

Insbesondere kann die mindestens eine Druckvorrichtung 15 auch in einem Bereich von Speichen des Rades 2 oder eines Felgenschlüssels des Rades 2 oder eines Felgenrings des Rades 2 angeordnet sein.

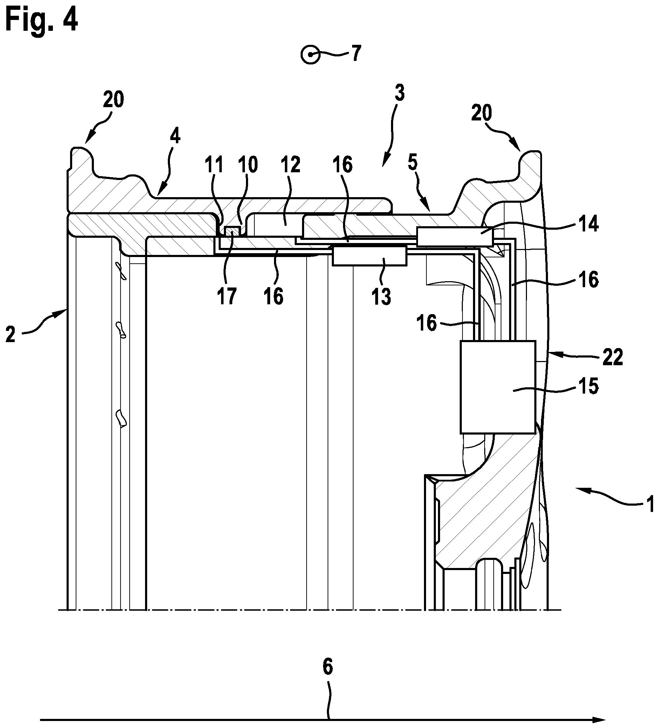

In der Figur 4 ist ein erfindungsgemäßes Radsystem 1 gemäß einer vierten Ausführungsform schematisch in Radialschnittansicht dargestellt.

Gemäß der Darstellung in der Figur 4 ist die mindestens eine Druckvorrichtung 15 innerhalb des Rades 2 angeordnet. Das mindestens eine erste Ventil 13 und das mindestens eine zweite Ventil 14 sind innerhalb der Verbindungsmittel 16 angeordnet. Dies führt zu einer noch besseren Ausnutzung des innerhalb des Radsystems 1 gegebenen Bauraums.

Die Verbindungsmittel 16 führen die hydraulisch wirkende Flüssigkeit von der mindestens einen Druckvorrichtung 15 durch die Ventile 13 und 14 in die Räume 11 und 12. Die mindestens eine Druckvorrichtung 15 ist in dem Rad 2 angeordnet.

Die mindestens eine Druckvorrichtung 15 ist gemäß der Darstellung in der Figur 4 im Bereich eines Felgenspiegels 22 angeordnet.

Insbesondere kann die mindestens eine Druckvorrichtung 15 auch in einem Bereich von Speichen des Rades 2 oder eines Felgenschlüssels des Rades 2 oder eines Felgenrings des Rades 2 angeordnet sein.

### Bezugszeichenliste

### (Teil der Beschreibung)

- 1: Radsystem
- 2: Rad
- 3: Felge
- 4: Erste Komponente
- 5: Zweite Komponente
- 6: Rotationsachse
- 7: Umlaufrichtung
- 8: Felgentiefraum
- 9: Tiefe des Felgentiefraumes
- 10: Trennelement
- 11: Erster Raum
- 12: Zweiter Raum
- 13: Erstes Ventil
- 14: Zweites Ventil
- 15: Druckvorrichtung
- 16: Verbindungsmittel
- 17: Dichtungselement
- 18: Dichtungsmittel
- 19: Gemeinsame Ventilvorrichtung
- 20: Felgenhorn
- 21: Felgentiefbett
- 22: Felgenspiegel

## Patentansprüche

1. Radsystem (1), aufweisend ein Rad (2), aufweisend eine Felge (3), wobei die Felge (3) eine erste Komponente (4) aufweist und eine zweite Komponente (5) aufweist, wobei die erste Komponente (4) parallel zu einer Rotationsachse (6) des Rades (2) bewegbar ist, und wobei die erste Komponente (4) und die zweite Komponente (5) einen Felgentiefraum (8) ausbilden, wobei sich eine Tiefe (9) des Felgentiefraumes (8) rechtwinklig zu der Rotationsachse (6) und rechtwinklig zu einer Umlaufrichtung (7) des Rades (2) erstreckt, und wobei die erste Komponente (4) ein Trennelement (10) aufweist, wobei sich das Trennelement (10) in den Felgentiefraum (8) erstreckt und eine Bewegung der ersten Komponente (4) parallel zu der Rotationsachse (6) zu einer Bewegung des Trennelementes (10) in dem Felgentiefraum (8) parallel zu der Rotationsachse (6) führt, und, dass eine Bewegung des Trennelementes (10) in dem Felgentiefraum (8) parallel zu der Rotationsachse (6) zu einer Bewegung der ersten Komponente (4) parallel zu der Rotationsachse (6) führt, und wobei das Trennelement (10) den Felgentiefraum (8) in einen ersten Raum (11) und in einen zweiten Raum (12) teilt, wobei eine Bewegung des Trennelements (10) in dem Felgentiefraum (8) eine reziproke Änderung der Volumina des ersten Raumes (11) und des zweiten Raumes (12) bewirkt,
**dadurch gekennzeichnet, dass**
der erste Raum (11) über mindestens ein erstes Ventil (13) und der zweite Raum (12) über mindestens ein zweites Ventil (14) mit mindestens einer Druckvorrichtung (15) fluidleitend verbindbar sind.

2. Radsystem (1) nach dem vorhergehenden Anspruch, aufweisend mindestens eine Druckvorrichtung (15), wobei die mindestens eine Druckvorrichtung (15) innerhalb des Rades (2) oder an dem Rad (2) oder außerhalb des Rades (2) angeordnet ist.

3. Radsystem (1) nach einem der vorhergehenden Ansprüche, **dadurch gekennzeichnet, dass** das mindestens eine erste Ventil (13) und/oder das mindestens eine zweite Ventil (14) mittels mindestens eines Verbindungsmittels (16), beispielsweise eines Schlauches oder einer starren Verbindungsleitung, mit der mindestens einen Druckvorrichtung (15) fluidleitend verbunden sind oder verbindbar sind.

4. Radsystem (1) nach dem vorhergehenden Anspruch, **dadurch gekennzeichnet, dass** das mindestens eine erste Ventil (13) in dem mindestens einen Verbindungsmittel (16) angeordnet ist und/oder das mindestens eine zweite Ventil (14) in dem mindestens einen Verbindungsmittel (16) angeordnet ist.

5. Radsystem (1) nach einer der Ansprüche 3 oder 4, **dadurch gekennzeichnet, dass** der Schlauch aus einem Elastomer und/oder einem Thermoplasten ausgebildet ist oder die starre Verbindungsleitung aus Stahl und/oder Aluminium und/oder einem Kunststoff, beispielsweise Polyamid, und/oder Karbon und/oder Kupfer und/oder Messing und/oder Zink ausgebildet ist.

6. Radsystem (1) nach einem der vorhergehenden Ansprüche 1 bis 3, **dadurch gekennzeichnet, dass** das mindestens eine erste Ventil (13) in der ersten Komponente (4) oder in der zweiten Komponente (5) angeordnet ist und/oder das mindestens eine zweite Ventil (14) in der ersten Komponente (4) oder in der zweiten Komponente (5) angeordnet ist.

7. Radsystem (1) nach einem der vorhergehenden Ansprüche 1 bis 3, **dadurch gekennzeichnet, dass** das mindestens eine erste Ventil (13) in der mindestens einen Druckvorrichtung (15) angeordnet ist und/oder das mindestens eine zweite Ventil (14) in der mindestens einen Druckvorrichtung (15) angeordnet ist.

8. Radsystem (1) nach einem der vorhergehenden Ansprüche 1 bis 3, **dadurch gekennzeichnet, dass** das mindestens eine erste Ventil (13) und das mindestens eine zweite Ventil (14) in einer gemeinsamen Ventilvorrichtung (19) angeordnet sind.

9. Radsystem (1) nach einem der vorhergehende Ansprüche, **dadurch gekennzeichnet, dass** es sich bei der mindestens einen Druckvorrichtung (15) um eine hydraulisch wirkende Druckvorrichtung (15) oder um eine pneumatisch wirkende Druckvorrichtung (15) handelt.

10. Radsystem (1) nach einem der vorhergehenden Ansprüche, **dadurch gekennzeichnet, dass** es sich bei dem mindestens einen ersten Ventil (13) und/oder bei dem mindestens einen zweiten Ventil (14) um ein Schieberventil oder um ein Sitzventil oder um ein Sperrventil oder um ein Wegeventil handelt.

11. Radsystem (1) nach einem der vorhergehenden Ansprüche, **dadurch gekennzeichnet, dass** das Trennelement (10) ein Dichtungselement (17) aufweist, wobei das Dichtungselement (17) mit einem Felgentiefbett (21) in Kontakt steht, wobei das Dichtungselement (17) insbesondere aus Stahl und/oder Aluminium und/oder einem Kunststoff, beispielsweise Polyamid, und/oder Karbon und/oder aus einem Elastomer und/oder einem Thermoplasten ausgebildet ist.

12. Radsystem (1) nach einem der vorhergehenden Ansprüche, **dadurch gekennzeichnet, dass** der erste Raum (11) und der zweite Raum (12) mittels mindestens eines Dichtungsmittels (18) fluiddicht abgeschlossen sind, wobei das mindestens eine Dichtungsmittel (18) insbesondere aus Stahl und/oder Aluminium und/oder einem Kunststoff, beispielsweise Polyamid, und/oder Karbon und/oder aus einem Elastomer und/oder einem Thermoplasten ausgebildet ist.

## Claims

1. Wheel system (1), having a wheel (2), having a rim (3), wherein the rim (3) has a first component (4) and has a second component (5), wherein the first component (4) is movable parallel to an axis of rotation (6) of the wheel (2), and wherein the first component (4) and the second component (5) form a rim drop space (8), wherein a depth (9) of the rim drop space (8) extends at a right angle relative to the axis of rotation (6) and at a right angle relative to a circumferential direction (7) of the wheel (2), and wherein the first component (4) has a separating element (10), wherein the separating element (10) extends into the rim drop space (8) and a movement of the first component (4) parallel to the axis of rotation (6) leads to a movement of the separating element (10) in the rim drop space (8) parallel to the axis of rotation (6), and wherein a movement of the separating element (10) in the rim drop space (8) parallel to the axis of rotation (6) leads to a movement of the first component (4) parallel to the axis of rotation (6), and wherein the separating element (10) divides the rim drop space (8) into a first space (11) and into a second space (12), wherein a movement of the separating element (10) in the rim drop space (8) brings about a reciprocal change in the volumes of the first space (11) and of the second space (12), **characterized in that**
the first space (11) can be connected in a fluid-conducting manner to at least one pressure apparatus (15) by means of at least one first valve (13), and the second space (12) can be connected in a fluid-conducting manner to at least one pressure apparatus (15) by means of at least one second valve (14).

2. Wheel system (1) according to the preceding claim, having at least one pressure apparatus (15), wherein the at least one pressure apparatus (15) is arranged within the wheel (2) or on the wheel (2) or outside the wheel (2).

3. Wheel system (1) according to either of the preceding claims, **characterized in that** the at least one first valve (13) and/or the at least one second valve (14) are/is connected or can be connected in a fluid-conducting manner to the at least one pressure apparatus (15) by way of at least one connecting means (16), for example a hose or a rigid connecting line.

4. Wheel system (1) according to the preceding claim, **characterized in that** the at least one first valve (13) is arranged in the at least one connecting means (16) and/or the at least one second valve (14) is arranged in the at least one connecting means (16) .

5. Wheel system (1) according to either of Claims 3 and 4, **characterized in that** the hose is formed from an elastomer and/or a thermoplastic or the rigid connecting line is formed from steel and/or aluminium and/or a plastic, for example polyamide, and/or carbon and/or copper and/or brass and/or zinc.

6. Wheel system (1) according to one of the preceding Claims 1 to 3, **characterized in that** the at least one first valve (13) is arranged in the first component (4) or in the second component (5) and/or the at least one second valve (14) is arranged in the first component (4) or in the second component (5) .

7. Wheel system (1) according to one of the preceding Claims 1 to 3, **characterized in that** the at least one first valve (13) is arranged in the at least one pressure apparatus (15) and/or the at least one second valve (14) is arranged in the at least one pressure apparatus (15).

8. Wheel system (1) according to one of the preceding Claims 1 to 3, **characterized in that** the at least one first valve (13) and the at least one second valve (14) are arranged in a common valve apparatus (19) .

9. Wheel system (1) according to one of the preceding claims, **characterized in that** the at least one pressure apparatus (15) is a hydraulically acting pressure apparatus (15) or a pneumatically acting pressure apparatus (15).

10. Wheel system (1) according to one of the preceding claims, **characterized in that** the at least one first valve (13) and/or the at least one second valve (14) are/is a slide valve or a seat valve or a shut-off valve or a directional valve.

11. Wheel system (1) according to one of the preceding claims, **characterized in that** the separating element (10) has a seal element (17), wherein the seal element (17) is in contact with a rim drop bed (21), wherein the seal element (17) is formed in particular from steel and/or aluminium and/or a plastic, for example polyamide, and/or carbon and/or from an elastomer and/or a thermoplastic.

12. Wheel system (1) according to one of the preceding claims, **characterized in that** the first space (11) and the second space (12) are closed in a fluid-tight manner by way of at least one seal means (18), wherein the at least one seal means (18) is formed in particular from steel and/or aluminium and/or a plastic, for example polyamide, and/or carbon and/or from an elastomer and/or a thermoplastic.

## Revendications

1. Système de roues (1), comportant une roue (2), comportant une jante (3), la jante (3) comprenant un premier composant (4) et un deuxième composant (5), le premier composant (4) étant mobile parallèlement à un axe de rotation (6) de la roue (2), et le premier composant (4) et le deuxième composant (5) formant un espace de creux de jante (8), une profondeur (9) de l'espace de creux de jante (8) s'étendant à angle droit de l'axe de rotation (6) et à angle droit d'une direction circonférentielle (7) de la roue (2), et le premier composant (4) comprenant un élément de séparation (10), l'élément de séparation (10) s'étendant dans l'espace de creux de jante (8) et un mouvement du premier composant (4) parallèlement à l'axe de rotation (6) conduisant à un mouvement de l'élément de séparation (10) dans l'espace de creux de jante (8) parallèlement à l'axe de rotation (6), et un mouvement de l'élément de séparation (10) dans l'espace de creux de jante (8) parallèlement à l'axe de rotation (6) conduisant à un mouvement du premier composant (4) parallèlement à l'axe de rotation (6), et l'élément de séparation (10) divisant l'espace de creux de jante (8) en un premier espace (11) et en un deuxième espace (12), un mouvement de l'élément de séparation (10) dans l'espace de creux de jante (8) provoquant une modification réciproque des volumes du premier espace (11) et du deuxième espace (12),
**caractérisé en ce que**
le premier espace (11) peut être raccordé de manière conductrice de fluide à au moins un dispositif de pression (15) par l'intermédiaire d'au moins une première soupape (13) et le deuxième espace (12) peut être raccordé de manière conductrice de fluide à au moins un dispositif de pression (15) par l'intermédiaire d'au moins une deuxième soupape (14).

2. Système de roue (1) selon la revendication précédente, comprenant au moins un dispositif de pression (15), l'au moins un dispositif de pression (15) étant agencé à l'intérieur de la roue (2) ou sur la roue (2) ou à l'extérieur de la roue (2).

3. Système de roue (1) selon l'une quelconque des revendications précédentes, **caractérisé en ce que** l'au moins une première soupape (13) et/ou l'au moins une deuxième soupape (14) sont raccordées ou peuvent être raccordées de manière conductrice de fluide à l'au moins un dispositif de pression (15) au moyen d'au moins un moyen de raccordement (16), par exemple d'un tuyau ou d'une conduite de raccordement rigide.

4. Système de roue (1) selon la revendication précédente, **caractérisé en ce que** l'au moins une première soupape (13) est agencée dans l'au moins un moyen de raccordement (16) et/ou l'au moins une deuxième soupape (14) est agencée dans l'au moins un moyen de raccordement (16).

5. Système de roue (1) selon l'une quelconque des revendications 3 ou 4, **caractérisé en ce que** le tuyau est formé en un élastomère et/ou en un thermoplastique ou la conduite de raccordement rigide est formée en acier et/ou en aluminium et/ou une matière plastique, par exemple en polyamide, et/ou en carbone et/ou en cuivre et/ou en laiton et/ou en zinc.

6. Système de roue (1) selon l'une quelconque des revendications 1 à 3 précédentes, **caractérisé en ce que** l'au moins une première soupape (13) est agencée dans le premier composant (4) ou dans le deuxième composant (5) et/ou l'au moins une deuxième soupape (14) est agencée dans le premier composant (4) ou dans le deuxième composant (5).

7. Système de roue (1) selon l'une quelconque des revendications 1 à 3 précédentes, **caractérisé en ce que** l'au moins une première soupape (13) est agencée dans l'au moins un dispositif de pression (15) et/ou l'au moins une deuxième soupape (14) est agencée dans l'au moins un dispositif de pression (15).

8. Système de roue (1) selon l'une quelconque des revendications 1 à 3 précédentes, **caractérisé en ce que** l'au moins une première soupape (13) et l'au moins une deuxième soupape (14) sont agencées dans un dispositif de soupapes commun (19).

9. Système de roue (1) selon l'une quelconque des revendications précédentes, **caractérisé en ce que** l'au moins un dispositif de pression (15) consiste en un dispositif de pression à action hydraulique (15) ou en un dispositif de pression à action pneumatique (15).

10. Système de roue (1) selon l'une quelconque des revendications précédentes, **caractérisé en ce que** l'au moins une première soupape (13) et/ou l'au moins une deuxième soupape (14) consistent en une soupape à tiroir ou en une soupape à siège ou en une soupape d'arrêt ou en une soupape à plusieurs voies.

11. Système de roue (1) selon l'une quelconque des revendications précédentes, **caractérisé en ce que** l'élément de séparation (10) comprend un élément d'étanchéité (17), l'élément d'étanchéité (17) étant en contact avec un lit de creux de jante (21), l'élément d'étanchéité (17) étant notamment formé en acier et/ou en aluminium et/ou en une matière plastique, par exemple en polyamide, et/ou en carbone et/ou en un élastomère et/ou en un thermoplastique.

12. Système de roue (1) selon l'une quelconque des revendications précédentes, **caractérisé en ce que** le premier espace (11) et le deuxième espace (12) sont fermés de manière étanche aux fluides au moyen d'au moins un moyen d'étanchéité (18), l'au moins un moyen d'étanchéité (18) étant notamment formé en acier et/ou en aluminium et/ou en une matière plastique, par exemple en polyamide, et/ou en carbone et/ou en un élastomère et/ou en un thermoplastique.
